(19) **Europäisches Patentamt**
**European Patent Office**
**Office européen des brevets**

(11) **EP 2 431 578 B1**

(12) **EUROPEAN PATENT SPECIFICATION**

(45) Date of publication and mention
of the grant of the patent:
**07.10.2015 Bulletin 2015/41**

(51) Int Cl.:
**F01D 25/16** (2006.01)   **F02K 3/06** (2006.01)
**F02C 3/06** (2006.01)

(21) Application number: **11178389.0**

(22) Date of filing: **23.08.2011**

(54) **Gas turbine engine bearing arrangement**

Lageranordnung für Gasturbinenmotor

Agencement de palier de moteur à turbine à gaz

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.09.2010 GB 201015437**

(43) Date of publication of application:
**21.03.2012 Bulletin 2012/12**

(73) Proprietor: **Rolls-Royce plc
London SW1E 6AT (GB)**

(72) Inventor: **Maguire, Alan
Derby, Derbyshire DE65 6AN (GB)**

(74) Representative: **Rolls-Royce plc
Intellectual Property Dept SinA-48
PO Box 31
Derby DE24 8BJ (GB)**

(56) References cited:
**EP-A2- 1 084 951     GB-A- 1 287 447
GB-A- 2 099 082     US-A- 5 735 666
US-A- 5 974 782     US-A1- 2006 093 464**

**Description**

The present invention relates to a gas turbine engine having contra-rotating shafts and an intershaft bearing arranged between those shafts.

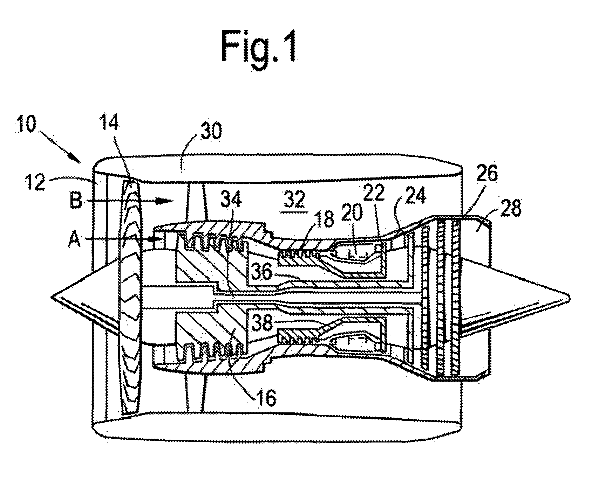

A conventional three-shaft gas turbine engine 10 is shown in Figure 1 and comprises an air intake 12 and a propulsive fan 14 that generates two airflows A and B. A nacelle 30 surrounds the gas turbine engine 10 and defines, in axial flow B, a bypass duct 32. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. The fan 14 is coupled to the low pressure turbine 26 by a low pressure shaft 34; the intermediate pressure compressor 16 is coupled to the intermediate pressure turbine 24 by an intermediate pressure shaft 36; and the high pressure compressor 18 is coupled to the high pressure turbine 22 by a high pressure shaft 38. The three shafts 34, 36, 38 are coaxial and co-rotate.

EP 1 084 951 A2 discloses a conventional three-shaft gas turbine engine.

It is known to provide an intershaft rolling element bearing between the co-rotating low pressure and intermediate pressure shafts 34, 36 or between the co-rotating intermediate pressure and high pressure shafts 36, 38. However, the relative speeds of rotation to which the contact surfaces of the rolling elements are subjected results in a relatively high cage speed, $N_{cage}$, typically of the order of 15,000rpm. The cage speed is defined as the tangential velocity of the rolling elements about the engine axis. This in turn results in a high stress induced by centrifugal forces acting on the bearing elements, $Stress_{CF}$, typically of the order of 1500-2000MPA. This has a detrimental effect on the life of the bearing since life is inversely proportional to the ninth power of $Stress_{CF}$, $Life \propto Stress_{CF}^{-9}$.

The work split between the turbines 22, 24, 26 of a conventional three-shaft gas turbine engine 10 is such that the intermediate pressure turbine 24 is located at a relatively large radius from the engine axis. However, this causes larger centrifugal stresses on all the components, and causes sealing problems at the annulus rim. Additionally, this work split requires a large number of rotor stages for the intermediate pressure compressor 16 relative to the high pressure compressor 18 which adds to the weight of the engine. Furthermore, the temperature drop across the high pressure turbine 22 is insufficient to cool the air so that rotor blade and stator vane cooling is required in the intermediate pressure turbine 24 components which also adds to the weight, cost and complexity of the gas turbine engine 10.

GB2099082 discloses a contra-rotating turbojet.

It would be beneficial to provide a gas turbine engine 10 having fewer intermediate compressor 16 stages, requiring less cooling of the turbine components and that reduces the centrifugal stresses induced in components.

Accordingly the present invention provides a gas turbine engine comprising a first rotor shaft having a stator stage comprising an annular array of stator blades and a rotor stage comprising an annular array of rotor blades; a second rotor shaft having only a rotor stage comprising an annular array of rotor blades, the annular array of rotor blades located axially downstream of the annular array of rotor blades on the first rotor shaft, and the second shaft arranged to contra-rotate relative to the first shaft; and an intershaft rolling element location bearing arranged between the first and second shafts, wherein the relative contra-rotation of the shafts minimises a cage speed of the intershaft bearing. The intershaft bearing locates radially and axially.

Advantageously, the gas turbine engine is axially shorter and lighter than a conventional gas turbine engine. There is less wear on the components of the bearing, and less component cooling required.

The first rotor shaft may be a high pressure shaft. The second rotor shaft may be an intermediate pressure shaft or a low pressure shaft. Each rotor stage may comprise a turbine stage.

The rotor stage of the first rotor shaft may expel supersonic air and the rotor stage of the second rotor shaft may expel subsonic air.

The cage speed of the intershaft bearing may be less than 2,000rpm.

Each rotor stage may comprise a compressor or fan stage.

The present invention also provides an intershaft rolling element bearing having a minimal cage speed, for a gas turbine engine as described above.

The present invention will be more fully described by way of example with reference to the accompanying drawings, in which:

Figure 1 is a sectional side view of a gas turbine engine according to the prior art.
Figure 2 is a sectional side view of the top half of a gas turbine engine according to the present invention.
Figure 3 is a schematic illustration of the relative speeds experienced by an intershaft bearing according to a first prior art arrangement.
Figure 4 is a schematic illustration of the relative speeds experienced by an intershaft bearing according to a second prior art arrangement.
Figure 5 is a schematic illustration of the relative speeds experienced by an intershaft bearing according to the present invention.

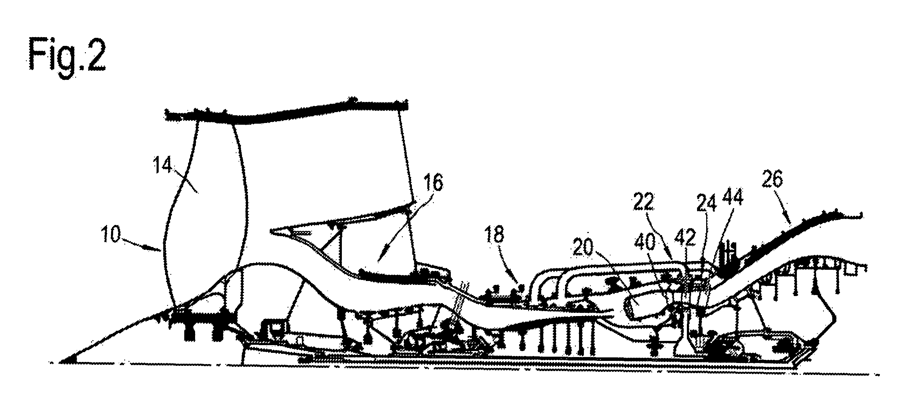

An exemplary embodiment of the gas turbine engine 10 according to the present invention is shown in Figure 2. The gas turbine engine 10 comprises the same components as in Figure 1. However, the high pressure shaft 38 and the intermediate pressure shaft 36 are arranged to contra-rotate. In a preferred embodiment the low pressure shaft 34 and the high pressure shaft 38 co-rotate, the intermediate pressure shaft 36 contra-rotating with respect to each of the other shafts.

The high pressure turbine 22 comprises an annular array of stator vanes 40 and an annular array of rotor blades 42, as in the prior art. The stator vanes 40 receive hot combustion gases from the combustor 20 and direct the flow downstream towards the rotor blades 42. The rotor blades 42 act in conventional manner to decelerate and expand the flow. Nonetheless, the swirling flow exiting the high pressure turbine 22 is supersonic. The high pressure turbine 22 performs more work than a conventional high pressure turbine 22 having subsonic exit flow. Therefore the temperature drop across the high pressure turbine 22 is increased. This means that blade cooling is not required for the intermediate pressure turbine 24. Beneficially this reduces the amount of air extracted from the compressors 16, 18 and therefore improves the engine efficiency. It also reduces the engine weight, as there is no requirement for ducting and the like to deliver cooling air, and may simplify the manufacture of the intermediate pressure turbine 24 components as cooling passages and film cooling holes are not required.

The intermediate pressure turbine 24 is positioned so that its annular array of rotor blades 44 is close to the rotor blades 42 of the high pressure turbine 22 in the downstream direction. Unlike the conventional arrangement in Figure 1, there is no annular array of stator vanes for the intermediate pressure turbine 24 because the air exiting the high pressure turbine rotor blades 42 is at a suitable incidence angle for the contra-rotating intermediate pressure turbine rotor blades 44. The number of rotor blades 42, 44 in each stage may be reduced depending on the specific engine application. Thus the weight of the engine is advantageously reduced by at least the weight of a stage of stator vanes.

Since the rotor blades 44 of the intermediate pressure turbine 24 closely follow the rotor blades 42 of the high pressure turbine 22, they are located at a smaller engine radius than the co-rotating prior art. This reduces the centrifugal stress exerted on the rotor blades 44 and associated components and hence the components are less susceptible to creep fatigue and similar degradation.

An additional benefit of increasing the work done by the high pressure turbine 22 relative to the intermediate pressure turbine 24 is that the number of rotor and stator stages required for their respective compressors is changed. The exact number of compressor stages in each compressor 16, 18 is dependent on the specific engine application but an exemplary application reduces the number of compressor stages by three, reduces the number of intermediate pressure turbine blades 44 by fifty to one hundred and removes all the intermediate pressure turbine vanes 40. This represents a substantial weight saving over the prior art.

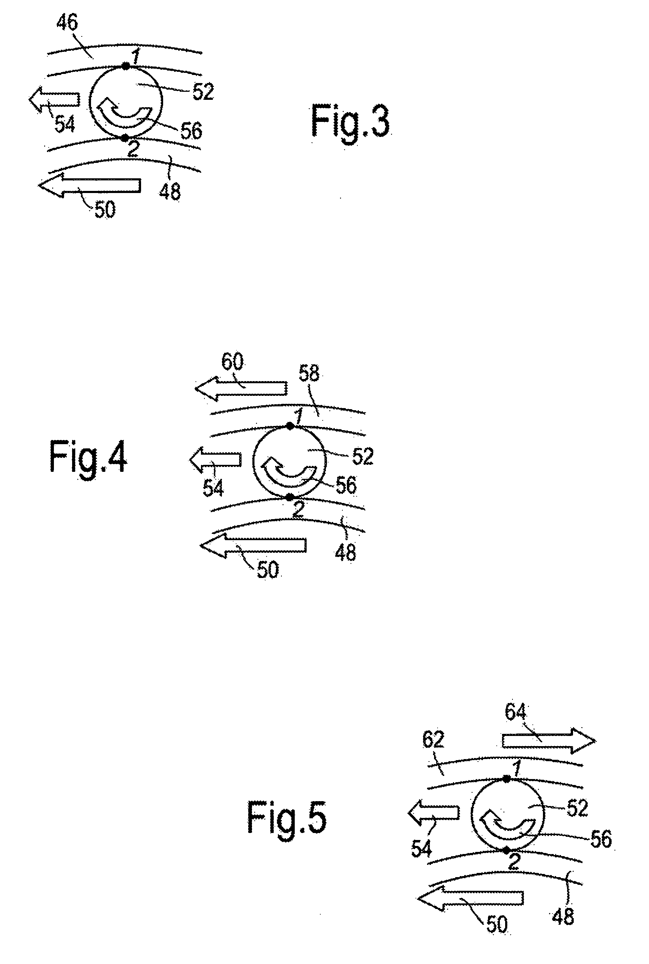

Figure 3 illustrates the speeds experienced by a bearing having a static outer race 46 which is coupled, for example, to a static part of the engine casing. The inner race 48 rotates at a tangential velocity $U_{inner}$ indicated by arrow 50. The inner race 48 may form part of or be coupled to a shaft 34, 36, 38 of the gas turbine engine 10. The bearing comprises an array of rolling elements 52, one of which is illustrated, that may be ball bearings or have another form as well known in the art. The rolling elements 52 are held in relative position by a cage (not illustrated) and process circumferentially between the outer race 46 and inner race 48 at a speed $U_{cage}$ indicated by arrow 54. Each rolling elements 52 rotates about its own centre at a speed $U_{element}$ indicated by arrow 56.

Point 1 is where the rolling element 52 impacts on the static outer race 46. Point 2 is where the rolling element 52 impacts on the rotating inner race 48. Points 1 and 2 are illustrated at top dead centre and bottom dead centre respectively. However, it will be apparent to the skilled reader that the contact point 1 will actually be where the resultant of the centrifugal and axial location forces meets the outer race 46 at a contact angle from the radial direction. Similarly contact point 2 will be diametrically opposite to this, where the projection of the resultant force meets the inner race 48. Two simultaneous equations can be written thus and solved to determine $U_{element}$ and $U_{cage}$ since $U_{inner}$ is known from the engine 10:

$$0 = U_{cage} - U_{element}$$
$$U_{inner} = U_{cage} + U_{element} \Rightarrow U_{cage} = U_{element} = \frac{1}{2} U_{inner}$$

Using cage and ball radii from a conventional gas turbine engine 10, the rotational speeds can be calculated and typically are of the order of $N_{cage}$=8,000rpm and $N_{element}$=60,000rpm. The centrifugal stress is proportional to $m_{element} \times U_{cage}^2 \times r_{cage}$, where $m_{element}$ is the mass of the ball and $r_{cage}$ is the radius of the cage. Therefore $Stress_{CF}$ is of the order of 600MPa. This has a detrimental effect on the life of the rolling elements 52 in the bearing because life is inversely proportional to the ninth power of centrifugal stress, $Life \propto Stress_{CF}^{-9}$.

Figure 4 is similar to Figure 3 but illustrates an intershaft bearing that has a rotating outer race 58 that rotates in the same direction, but at a different speed, to the inner race 48 instead of a static outer race 46. The outer race 58 rotates at a velocity $U_{outer}$ in the direction indicated by arrow 60, tangential to its circumference. Thus the two simultaneous equations can be written thus and solved as before:

$$U_{outer} = U_{cage} - U_{element} \\ U_{inner} = U_{cage} + U_{element} \Rightarrow U_{cage} = \frac{U_{inner} + U_{outer}}{2} \text{ and } U_{element} = \frac{U_{inner} - U_{outer}}{2}$$

Using the same cage and ball radii as for Figure 3, the rotational speeds are of the order of $N_{cage}$=15,000rpm and $N_{element}$=10,000rpm. The centrifugal stress in this case is of the order of 2000MPa, more than three times greater than for the bearing of Figure 3.

Figure 5 illustrates the relative speeds acting on the rolling element 52 of the intershaft bearing according to the present invention. The outer race 62 contrarotates with respect to the inner race 48, at a velocity $U_{outer}$ in a direction indicated by arrow 64. This changes the sign of one of the terms of the first of the simultaneous equations and thus the resulting velocities:

$$U_{outer} = U_{element} - U_{cage} \\ U_{inner} = U_{cage} + U_{element} \qquad U_{cage} = \frac{U_{inner} - U_{outer}}{2} \text{ and } \Rightarrow U_{element} = \frac{U_{inner} + U_{outer}}{2}$$

Using the same cage and ball radii as for Figures 3 and 4, the rotational speeds for the present invention are of the order of $N_{cage}$=1,000rpm and $N_{element}$=120,000rpm, thereby minimising the cage speed within the design constraints of engine radius and rolling element 52 radius. Thus the centrifugal stress is substantially reduced, to be in the order of 30MPa, twenty times smaller than for the bearing of Figure 3 and more than sixty times smaller than for the intershaft bearing of Figure 4. Hence substantially less damage is inflicted on the rolling elements 52 in the contrarotating intershaft bearing than in the rotating-static bearing or co-rotating intershaft bearing. Advantageously, this increases the life of the rolling elements 52 and the outer race 62.

An additional benefit of the intershaft bearing of the present invention is that the faster the rotational speed of the rolling elements 52, the better the rate of cooling because more cooling fluid is entrained in the wake of each rolling element 52. Thus the rolling elements 52 in Figure 5 entrain more cooling fluid than the rolling elements 52 in Figure 3 and significantly more than the rolling elements 52 in Figure 4.

Thus the gas turbine engine 10 of the present invention, that comprises contra-rotating rotor shafts 36, 38 and an intershaft bearing, benefits from the advantageous effects of reduced weight and complexity of the turbines 22, 24, improved temperature drop across the high pressure turbine 22 resulting in a reduced cooling requirement, and longer life rolling elements 52 in the intershaft bearing. Advantageously, the cage speed $U_{cage}$ is reduced as a consequence of contra-rotating the outer race 62 and inner race 48. If the design flexibility is available, the cage speed may be minimised by altering the relative race velocities 50, 64.

The gas turbine engine 10 also has a reduced axial length compared to conventional gas turbine engines 10 since the intermediate pressure turbine 24 does not include a stator stage and is closer to the high pressure turbine 22. Beneficially this means that nacelle drag is reduced, the total engine weight is reduced since less casing is required inter alia, and integration with the airframe is simplified. This results in reduced fuel burn which in turn reduces operating costs for the aircraft. Where the gas turbine engine 10 is used in a marine or industrial application, the reduced axial length enables easier fitting and the reduced weight enables more flexibility in positioning, for example in a ship.

Although the present invention has been described with respect to a three-shaft gas turbine engine 10 with the high pressure and intermediate pressure shafts 36, 38 arranged to contra-rotate, it will be apparent to the skilled reader that many of the benefits and advantages can also be obtained by arranging the low pressure and intermediate pressure shafts 34, 36 to contra-rotate. The intermediate pressure shaft 36 may contra-rotate with respect to each of the high pressure and low pressure shafts 34, 38, in which case at least one intershaft bearing is provided between each pair of shafts. The present invention can be applied with equal felicity to a two-shaft gas turbine engine 10, with the high and low pressure shafts 34, 38 arranged to contra-rotate.

Although the contra-rotating intershaft bearing has been described between the shafts and related to the turbines 22, 24, 26, a contra-rotating intershaft bearing can be provided between the shafts and related to the fan 14 and compressors 16, 18. This may be in addition to the intershaft bearing related to the turbines 22, 24, 26.

For example, a contra-rotating intershaft location bearing according to the present invention may be provided for a two-shaft geared fan gas turbine engine. The intershaft bearing in this case is located between the low pressure turbine and the fan where the fan is geared to contra-rotate at a different speed to the low pressure turbine which rotates at relatively high speed. In this case the intershaft bearing reacts the axial fan load as well as the centrifugal load leaving the gearbox substantially unloaded in the axial direction. Advantageously this enables the fan support to straddle the gearbox arrangement thereby improving its stability.

**Claims**

1. A gas turbine engine (10) comprising:

   - a first rotor shaft (38) having a stator stage comprising an annular array of stator blades (40) and a rotor stage comprising an annular array of rotor blades (42) **characterised by**:

     - a second rotor shaft (36) having only a rotor stage comprising an annular array of rotor blades (44), the annular array of rotor blades (44) located axially downstream of the annular array of rotor blades (42) on the first rotor shaft (38), and the second shaft (36) arranged to contra-rotate relative to the first shaft (38); and
     - an intershaft rolling element location bearing arranged between the first and second shafts, wherein the relative contra-rotation of the shafts minimises a cage speed (54) of the intershaft bearing.

2. A gas turbine engine (10) as claimed in claim 1 wherein the first rotor shaft (38) is a high pressure shaft.

3. A gas turbine engine (10) as claimed in claim 1 or claim 2 wherein the second rotor shaft (36) is an intermediate pressure shaft.

4. A gas turbine engine (10) as claimed in claim 1 or claim 2 wherein the second rotor shaft (36) is a low pressure shaft.

5. A gas turbine engine (10) as claimed in any of claims 1 to 4 wherein each rotor stage comprises a turbine stage (22, 24, 26).

6. A gas turbine engine (10) as claimed in any preceding claim wherein the rotor stage of the first rotor shaft (38) expels supersonic air and the rotor stage of the second rotor shaft (36) expels subsonic air.

7. A gas turbine engine (10) as claimed in any preceding claim wherein the cage speed (54) of the intershaft bearing is less than 2000rpm.

8. A gas turbine engine (10) as claimed in any of claims 1 to 4 wherein each rotor stage comprises a compressor (16, 18) or fan stage (14).

9. An intershaft rolling element bearing having a minimal cage speed (54), for a gas turbine engine (10) as claimed in any preceding claim.

**Patentansprüche**

1. Ein Gasturbinentriebwerlc (10), umfassend:

   - eine erste Rotorwelle (38) mit einer Statorstufe, umfassend eine ringförmige Anordnung von Leitschaufeln (40) und eine Rotorstufe, umfassend eine ringförmige Anordnung von Rotorschaufeln (42), **gekennzeichnet durch**:

     - eine zweite Rotorwelle (36) mit nur einer Rotorstufe, umfassend eine ringförmige Anordnung von Rotorschaufeln (44), wobei die ringförmige Anordnung von Rotorschaufeln (44) axial nach der ringförmigen Anordnung der Rotorschaufeln (42) auf der ersten Rotorwelle (38) angeordnet ist, und die zweite Welle (36) so angeordnet ist, dass sie sich gegenläufig zur ersten Welle (38) dreht; und
     - ein Zentrierlager für den Zwischenwellen-Wälzkörper, angeordnet zwischen den ersten und zweiten Wellen, wobei die relative gegenläufige Drehung der Wellen eine Käfigdrehzahl (54) des Zwischenwellenlagers minimiert.

2. Gasturbinentriebwerk (10) nach Anspruch 1, wobei die erste Rotorwelle (38) eine Hochdruckwelle ist.

3. Gasturbinentriebwerk (10) nach Anspruch 1 oder Anspruch 2, wobei die zweite Rotorwelle (36) eine Zwischendruckwelle ist.

4. Gasturbinentriebwerk (10) nach Anspruch 1 oder Anspruch 2, wobei die zweite Rotorwelle (36) eine Niederdruckwelle ist.

5. Gasturbinentriebwerk (10) nach einem der Ansprüche 1 bis 4, wobei jede Rotorstufe eine Turbinenstufe (22, 24, 26) umfasst.

6. Gasturbinentriebwerk (10) nach einem der vorhergehenden Ansprüche, wobei die Rotorstufe der ersten Rotorwelle (38) Überschallluft ausstößt und die Rotorstufe der zweiten Rotorwelle (36) Überschallluft ausstößt.

7. Gasturbinentriebwerk (10) nach einem der vorhergehenden Ansprüche, wobei die Käfigdrehzahl (54) des Zwischenwellenlagers weniger als 2000 U/min beträgt.

8. Gasturbinentriebwerk (10) nach einem der Ansprüche 1 bis 4, wobei jede Rotorstufe einen Kompressor (16, 18) oder eine Lüfterstufe (14) umfasst.

9. Zwischenwellen-Wälzkörperlager mit minimaler Käfigdrehzahl (54) für ein Gasturbinentriebwerk (10) wie in einem der vorhergehenden Ansprüche gefordert.


**Revendications**

1. Un moteur à turbine à gaz (10), comprenant :

   un premier arbre de rotor (38) avec un étage fixe comprenant un réseau annulaire d'aubes de stator (40) et un étage rotor comprenant un réseau annulaire d'aubes de rotor (42), **caractérisé par** :

   un deuxième arbre de rotor (36) ne possédant qu'un seul étage rotor comprenant un réseau annulaire d'aubes de rotor (44), le réseau annulaire d'aubes de rotor (44) étant situé dans un plan axial en aval du réseau annulaire d'aubes de rotor (42) sur le premier arbre de rotor (38), et le deuxième arbre de rotor (36) étant disposé de façon à tourner dans le sens opposé par rapport au premier arbre (38) ; et
   un palier de positionnement d'un élément rotatif inter-arbres, disposé entre le premier et le deuxième arbres, la contre-rotation relative des arbres minimisant une vitesse de cage (54) du palier inter-arbres.

2. Un moteur à turbine à gaz (10) selon la revendication 1, dans lequel le premier arbre de rotor (38) est un arbre haute pression.

3. Un moteur à turbine à gaz (10) selon la revendication 1 ou la revendication 2, dans lequel le deuxième arbre de rotor (36) est un arbre de moyenne pression.

4. Un moteur à turbine à gaz (10) selon la revendication 1 ou la revendication 2, dans lequel le deuxième arbre de rotor (36) est un arbre de basse pression.

5. Un moteur à turbine à gaz (10) selon une quelconque des revendications 1 à 4, dans lequel chaque arbre de rotor comprend un étage de turbine (22, 24, 26).

6. Un moteur à turbine à gaz (10) selon une quelconque des revendications précédentes, dans lequel l'étage de rotor du premier arbre de rotor (38) refoule de l'air supersonique, et l'étage de rotor du deuxième arbre de rotor (36) refoule de l'air subsonique.

7. Un moteur à turbine à gaz (10) selon une quelconque des revendications précédentes, dans lequel la vitesse de cage (54) du palier inter-arbres est inférieure à 2 000 tr/mn.

8. Un moteur à turbine à gaz (10) selon une quelconque des revendications 1 à 4, dans lequel chaque étage de rotor comprend un compresseur (16, 18) d'un étage de ventilateur (14).

9. Un palier d'un élément rotatif inter-arbres présentant une vitesse de cage (54) minimale, pour moteur à turbine à gaz (10) selon une quelconque des revendications précédentes.

# Fig.1

Fig.2

Fig.3

Fig.4

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1084951 A2
- GB 2099082 A